# EUROPEAN PATENT SPECIFICATION

(11) **EP 1 645 889 B1**
(45) Date of publication and mention of the grant of the patent: **25.08.2010**
(21) Application number: 05020837.0
(22) Date of filing: 23.09.2005
(51) Int. Cl.: G01S 5/14, G01S 5/00

(54) **Mobile communication terminal and method for determining its position**
Mobilkommunikationsgerät und Verfahren zur Ortsbestimmung
Terminal mobile de communication et procédé pour déterminer sa position

(30) Priority: 08.10.2004 JP 2004296585
(43) Date of publication of application: 12.04.2006
(73) Proprietor: NTT DoCoMo, Inc., Tokyo 100-6150 (JP)
(72) Inventor: Otsuka, Takayuki, c/o Intel.Property Dept, NTT DoCoMo, Inc., Chiyoda-ku Tokyo 100-6150 (JP); Menjo, Hiroyuki c/o Intel.Property.Dept. NTT DoCoMo, Inc., Chiyoda-ku Tokyo 100-6150 (JP); Murata, Katsutoshi NTT Software Corporation, Yokohama-shi Kanagawa 231-8554 (JP)
(74) Representative: Viering, Jentschura & Partner

(56) References cited:
- EP-A- 1 251 362
- WO-A-03/092319
- US-A- 5 999 126
- US-A1- 2003 114 170
- US-B1- 6 707 424

## Description

### BACKGROUND OF THE INVENTION

### Field of the Invention

The present invention relates to a mobile communication terminal and a position information using method.

### Related Background of the Invention

There are mobile communication terminals configured to acquire position information and to provide geographical information. The position information acquired by the mobile communication terminals is classified under base station position information and GPS position information. The base station position information is position information calculated using base stations under communication with a mobile communication terminal in a mobile communication network to which the mobile communication terminal belongs. The GPS position information is position information acquired using the global positioning system (GPS). In general, the GPS position information requires more time than the base station position information.

Patent Document 1 discloses the technology in which the mobile communication terminal first displays the base station position information acquired earlier and then switches the display to the GPS position information upon acquisition of the GPS position information later on.
[Patent Document 1]Japanese Patent Application Laid-Open No. 2003-284121

According to EP1251362 A2 when a position measurement accuracy of the present position which the base station distance and position measurement part measures from radio waves coming from base stations is not good, a GPS distance and position measurement part measures the present position from radio waves coming from GPS satellites. When position measurement accuracy of the present position obtained by the GPS distance and position measurement part is not good, a position measurement accuracy analysis part compounds the present position obtained by the base station distance and position measurement part with the present position obtained by the GPS distance and position measurement part, and calculates a new position within a range of overlap between a position measurement error of the present position obtained by the base station distance and position measurement part and a position measurement error of the present position obtained by the GPS distance and position measurement part.

According to the US-patent US5999126 a position measuring apparatus includes a first position measuring device for position measuring a first position by receiving a first radio wave, a second position measuring device for position measuring a second position by receiving a second radio wave, an evaluating unit for evaluating uncertainty of data derived from the first position measuring device and/or the second position measuring device, and a selecting element for selecting data from the first position measuring device or the second position measuring device based on an output signal of the evaluating unit.
Further devices and methods to improve the accuracy of the detected position of a mobile device are not known.

### SUMMARY OF THE INVENTION

The technology described in above Patent Document 1 is premised on the assumption that the GPS position information requiring more time for acquisition has higher accuracy than the base station information. However, the Inventors found the following phenomenon as a result of investigation. For example, in the urban area or the like, the accuracy of the GPS position information is low because of a small number of satellites outputting signals that can be received by mobile communication terminals. On the other hand, the number of mobile communication terminals used is large in the urban area or the like, and the accuracy of the base station position information is high because of a large number of base stations relative to the size of the urban area. Therefore, the Inventors discovered that the accuracy of the GPS position information is sometimes lower than the accuracy of the base station position information in the urban area or the like.

An object of the present invention is therefore to provide a mobile communication terminal capable of using the base station position information and the GPS position information more appropriately.

A mobile communication terminal according to the present invention is a mobile communication terminal comprising: first position acquiring means for acquiring first position information of the mobile communication terminal calculated using a position of at least one base station under which the mobile communication terminal is placed; second position acquiring means for acquiring second position information of the mobile communication terminal, using the global positioning system; accuracy comparing means for making a comparison between respective accuracies of the first position information and the second position information; and position information using means for selectively using the first position information or the second position information in accordance with a result of the comparison; wherein the position information using means first uses the first position information, irrespective of the result of the comparison made by the accuracy comparing means, and, thereafter, uses position information with higher accuracy out of the first position information and the second position information in accordance with the result of the comparison made by the accuracy comparing means.

A position information using method of the present invention is a position information using method comprising: a step wherein first position acquiring means acquires first position information of a mobile communication terminal calculated using a position of at least one base station under which the mobile communication terminal is placed; a step wherein second position acquiring means acquires second position information of the mobile communication terminal, using the global positioning system; a step wherein accuracy comparing means makes a comparison between respective accuracies of the first position information and the second position information; a step wherein position information using means selectively uses the first position information or the second position information in accordance with a result of the comparison; and a step wherein the position information using means first uses the first position information, irrespective of the result of the comparison made by the accuracy comparing means, and, thereafter, uses position information with higher accuracy out of the first position information and the second position information in accordance with the result of the comparison made by the accuracy comparing means.

Since in the mobile communication terminal and the position information using method of the present invention the accuracy comparing means makes the comparison between the respective accuracies of the first position information and the second position information, it is feasible to securely find out which accuracy is higher between the first position information and the second position information. Since the position information using means is arranged first to use the first position information, irrespective of the result of the comparison between the accuracies, and thereafter to use the position information with higher accuracy out of the first position information and the second position information in accordance with the result of the comparison between the accuracies, it is feasible first to use the first position information that can be easily acquired, and thereafter to use the position information with higher accuracy in accordance with the result of the comparison between the accuracies.

In the mobile communication terminal of the present invention, preferably, each of the first position information and the second position information contains error information indicating a horizontal error, and the accuracy comparing means makes the comparison between the accuracies on the basis of the error information contained in each of the first position information and the second position information. Since the comparison between the accuracies is made based on the error information indicating the horizontal error, it is feasible to make quantitative comparison between the accuracy of the first position information and the accuracy of the second position information.

In the mobile communication terminal of the present invention, preferably, when a horizontal error of the first position information indicated by error information contained in the first position information is within a predetermined error, the second position acquiring means does not acquire the second position information. Since the acquisition of the second position information is not carried out when the horizontal error of the first position information is within the predetermined error, it is feasible to eliminate the time necessary for acquisition of the second position information when the first position information is obtained with the accuracy over a predetermined level.

In the mobile communication terminal of the present invention, preferably, when the base station used in calculation of the first position information is a specific base station, the first position information contains information about the specific base station, and the second position acquiring means does not acquire the second position information. When it is known in advance that it is infeasible to acquire the second position information with a higher accuracy than that of the first position information calculated using the specific base station, the time for acquisition of the second position information can be eliminated.

The present invention successfully provides the mobile communication terminal capable of using the base station position information and the GPS position information more appropriately.

### BRIEF DESCRIPTION OF THE DRAWINGS

Fig. 1 is an illustration showing a configuration of a cell phone as an embodiment of the present invention.
Fig. 2 is a flowchart showing an operation of the cell phone and a position information using method as an embodiment of the present invention.

### DESCRIPTION OF THE PREFERRED EMBODIMENTS

The expertise of the present invention can be readily understood in view of the following detailed description with reference to the accompanying drawings presented for illustrative purposes only. Subsequently, an embodiment of the present invention will be described with reference to the accompanying drawings. Identical portions will be denoted by the same reference symbols as much as possible, without redundant description.

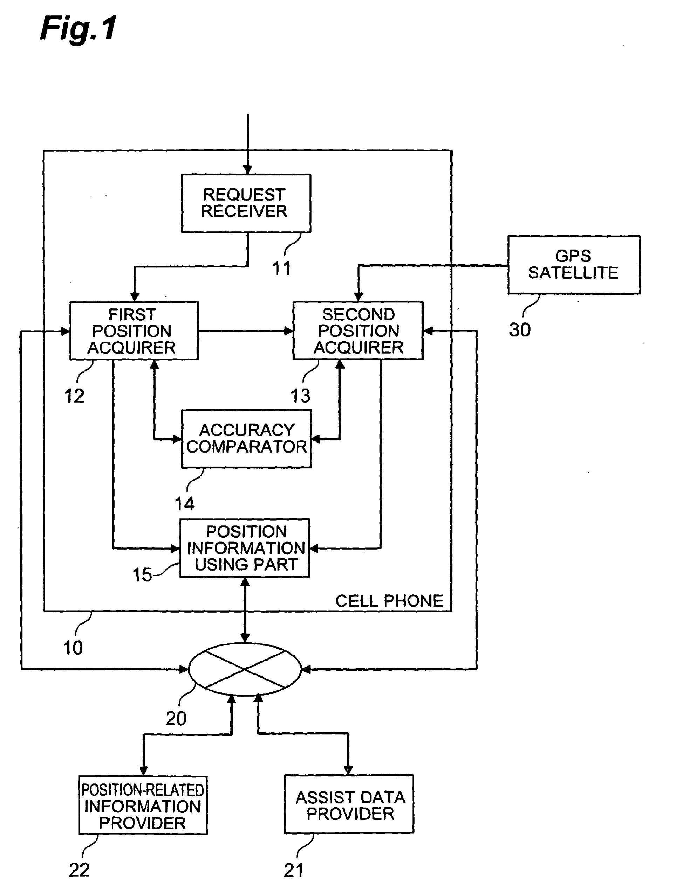

A cell phone of the present embodiment will be described with reference to Fig. 1. Fig. 1 is an illustration for explaining a configuration of cell phone 10 (mobile communication terminal).

The cell phone 10 is a mobile station capable of transmitting and receiving information as well as making a phone call, and in cell phone network 20 the cell phone 10 is placed under at least one base station. The cell phone 10 is able to calculate the position, based on data received through cell phone network 20 from assist data provider 21 and radio waves received from GPS satellites of the Global Positioning System (GPS) 30. Based on the acquired position information, the cell phone 10 is able to acquire position-related information through cell phone network 20 from position-related information provider 22 and to display the position-related information.

The cell phone 10 is, physically, an information communication device composed of elements such as a CPU, a memory, a power supply, a power amplifier, a frequency conversion chip, an antenna, and an input/output interface part.

The cell phone 10 is provided with the following functional components: request receiver 11, first position acquirer 12 (first position acquiring means), second position acquirer 13 (second position acquiring means), accuracy comparator 14 (accuracy comparing means), and position information using part 15 (position information using means). Subsequently, each of the components of the cell phone 10 will be described.

The request receiver 11 is a part that receives a request for position-related information. The position-related information is, for example, information such as geographical information around a place where the cell phone 10 is located. When receiving a request for position-related information, the request receiver 11 outputs reception information indicating the reception of the request for position-related information, to first position acquirer 12.

The first position acquirer 12 is a part that acquires first position information of cell phone 10 calculated using the position of at least one base station under which the cell phone 10 is placed, and error information indicating a horizontal error of the first position information. More specifically, when receiving the reception information from the request receiver 11, the first position acquirer 12 acquires the first position information from cell phone network 20 to which the cell phone 10 belongs. The first position acquirer 12 transmits and receives information to and from the cell phone network 20, physically, through transmitting/receiving means consisting of the aforementioned power amplifier, frequency conversion chip, antenna, and so on. The first position information is calculated using the electric field intensity of a radio wave from the base station, received by the cell phone 10, in the cell phone network 20 and the position of the base station. The first position acquirer 12 outputs the first position information thus acquired, to the position information using part 15.

Furthermore, the first position acquirer 12 determines whether the horizontal error of the first position information indicated by the acquired error information is within a predetermined error. For example, it determines whether the horizontal error of the first position information is not more than A [m]. Numerical value A is, for example, a number between 25 and 400. The horizontal error of the first position information calculated using an outdoor base station is normally not less than 400 [m]. On the other hand, the horizontal error of the first position information calculated using an indoor base station is about 25 [m]. Therefore, by setting the numerical value A between 25 and 400 and determining whether the horizontal error of the first position information is not more than A [m], it is feasible to determine whether the base station used in calculation of the first position information is one installed indoors or one installed outdoors.

When the result of the determination is that the horizontal error is larger than A [m], the first position acquirer 12 outputs information to request acquisition of the second position information, and the first position information to the second position acquirer 13. In addition, the first position acquirer 12 outputs the error information indicating the horizontal error of the first position information, to the accuracy comparator 14.

The second position acquirer 13 is a part that acquires second position information of cell phone 10 by making use of GPS, and error information indicating a horizontal error of the second position information. Acquisition of the second position information will be specifically described. The second position acquirer 13 acquires assist data from assist data provider 21. The second position acquirer 13 transmits and receives information to and from the cell phone network 20, physically, through transmitting/receiving means consisting of the aforementioned power amplifier, frequency conversion chip, antenna, and so on. The assist data is data specifying GPS satellites used in calculation of position, out of the twenty four GPS satellites around the earth. The second position acquirer 13 also receives ephemeris information from the GPS satellites. The ephemeris information is information containing orbit information and time information of each GPS satellite. The second position acquirer 13 performs GPS-based positioning. The GPS-based positioning is to specify GPS satellites necessary for positioning, based on the acquired assist data, and to calculate the latitude and longitude of the present location using the ephemeris information fed from the GPS satellites. The second position information is acquired through the GPS-based positioning.

The second position acquirer 13 outputs the error information indicating the horizontal error of the second position information, to the accuracy comparator 14. Furthermore, when receiving information indicating output of the second position information from the accuracy comparator 14, the second position acquirer 13 outputs the second position information to the position information using part 15.

The accuracy comparator 14 is a part that makes a comparison between respective accuracies of the first position information and the second position information, based on the error information indicating the respective horizontal errors in the first position information and the second position information. When the result of the comparison between the accuracies is that the horizontal error of the second position information is not more than the horizontal error of the first position information, the accuracy comparator 14 outputs the information indicating output of the second position information to the position information using part 15, to the second position acquirer 13.

The position information using part 15 is a part that first uses the first position information, irrespective of the result of the comparison made by the accuracy comparator 14, and thereafter uses position information with higher accuracy out of the first position information and the second position information in accordance with the result of the comparison made by the accuracy comparator. The use of the position information is, for example, such that the geographical information around the position indicated by the position information is acquired from the position-related information provider 22 and displayed on an unrepresented display part of cell phone 10. The use of the position information will be specifically described. The position information using part 15 transmits to the position-related information provider 22 the position information used, the error information indicating the horizontal error of the position information, and terminal identification information to identify the cell phone 10, whereupon the position-related information provider 22 sends back position-related information with the geographical information related to the position information, to the cell phone 10. The cell phone 10 displays the position-related information sent back by the position-related information provider 22, on a display screen.

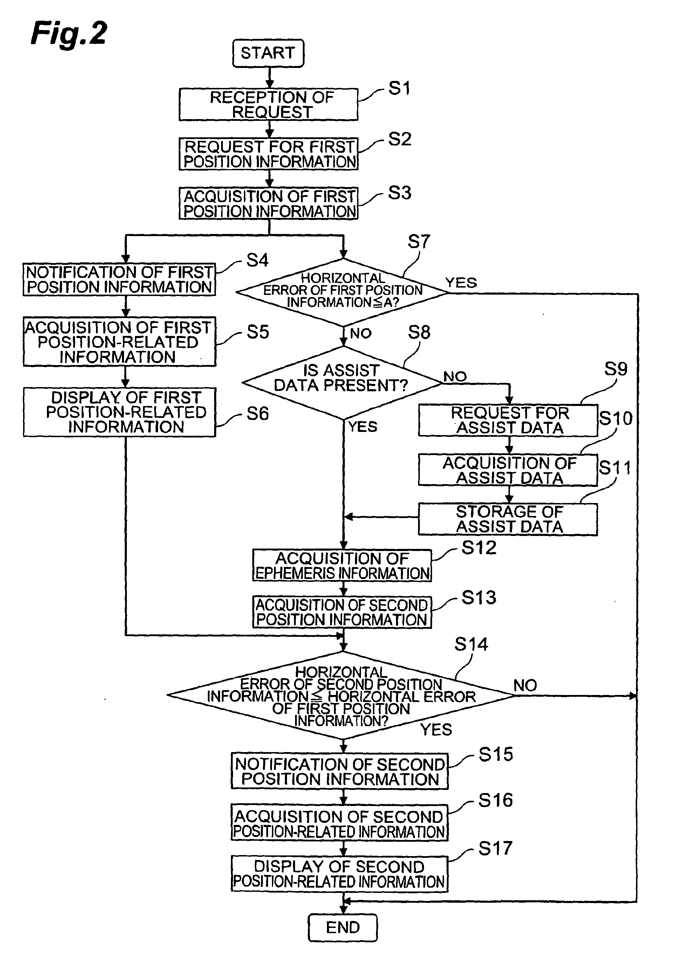

Subsequently, a position information using method will be described while describing the operation of the cell phone 10. Fig. 2 is a flowchart showing the operation of the cell phone 10.

The request receiver 11 receives a request for position-related information (S1). When the request for position-related information is received, the first position acquirer 12 sends a request for first position information, to the cell phone network 20 (S2). The first position acquirer 12 acquires from the cell phone network 20 the first position information and the error information indicating the horizontal error of the first position information (S3).

After the acquisition of the first position information, the position information using part 15 notifies the position-related information provider 22 of the first position information, the error information of the first position information, and the identification information of cell phone 10 (S4). The position information using part 15 acquires first position-related information generated according to the information thus notified of, by the position-related information provider 22 (S5). After the acquisition of the first position-related information, the position information using part 15 displays the first position-related information (S6).

After the acquisition of the first position information, the first position acquirer 12 determines whether the horizontal error of the first position information is not more than a predetermined value A [m] (S7). When the horizontal error of the first position information is not more than the predetermined value A [m] (YES at S7), the sequential operation is terminated. For example, let us explain a specific case where the predetermined value is 100 [m] and where the horizontal error of the first position information is 25 [m]. In general, where the first position information is calculated using the position of an indoor base station, the horizontal error of the first position information is about several ten meters. On the other hand, where the first position information is calculated using the position of an outdoor base station, the horizontal error of the first position information is a value of not less than 400 [m]. When the horizontal error of the first position information is 25 [m] as described above, the cell phone 10 is located indoors, because the first position information is calculated using the position of an indoor base station. Since the cell phone 10 is unable to acquire the ephemeris information from GPS satellites indoors, the second position information is not available. Therefore, the sequential operation is terminated, so as to eliminate the time necessary for acquisition of the second position information.

When the horizontal error of the first position information is larger than the predetermined value A [m] (NO at S7), the second position acquirer 13 determines whether there is effective assist data stored (S8). When there is effective assist data (YES at S8), the second position acquirer 13 acquires the ephemeris information (S12).

On the other hand, when there is no effective assist data (NO at S8), the second position acquirer 13 sends information indicating a request for assist data, to the assist data provider 21 (S9). In accordance with the request for assist data, the second position acquirer 13 acquires the assist data provided by the assist data provider 21 (S10). The second position acquirer 13 stores the assist data thus acquired (S11). After the assist data is stored, the second position acquirer 13 acquires the ephemeris information (S12).

After acquisition of the ephemeris information, the second position acquirer 13 acquires the second position information and the error information of the second position information (S13). After acquisition of the horizontal error of the second position information, the accuracy comparator 14 makes a comparison between the horizontal error of the second position information and the horizontal error of the first position information (S14). When the horizontal error of the second position information is larger than the horizontal error of the first position information (NO at S 14), the sequential operation is terminated. When the horizontal error of the second position information is not more than the horizontal error of the first position information (YES at S 14), the position information using part 15 notifies the position-related information provider 22 of the second position information, the error information of the second position information, and the identification information of cell phone 10 (S15). The position information using part 15 acquires second position-related information generated according to the information thus notified of, by the position-related information provider 22 (S16). After acquisition of the second position-related information, the position information using part 15 displays the second position-related information by switching the first position-related information thereto (S 17).

Subsequently, the action and effect of the present embodiment will be described. Since the first position information or the second position information is selectively used in accordance with the result of the comparison between the horizontal errors, the embodiment provides the mobile communication terminal capable of using the base station position information and the GPS position information more appropriately.

The above embodiment was configured not to acquire the second position information when the horizontal error of the first position information was within the predetermined error. However, it is also possible to adopt a configuration wherein when the base station used in the calculation of the first position information is a specific base station, the first position information contains information about the specific base station, and the acquisition of the second position information is not carried out. For example, supposing a base station installed indoors is the specific base station, the first position information is calculated using the base station installed indoors, and in that case the second position information is not acquired. Since the cell phone 10 is unable to acquire the second position information indoors, it can eliminate the time necessary for acquisition of the second position information.

The cell phone network 20 in the present embodiment does not embrace only cell phone networks of the so-called PDC system and W-CDMA system, but also embraces networks available for IP cell phones and networks available for Bluetooth (registered trademark) cell phones. Therefore, the base stations in the cell phone network 20 include wireless LAN base stations and Bluetooth (registered trademark) base stations.

## Claims

1. A mobile communication terminal (10) comprising:
first position acquiring means (12) for acquiring first position information of the mobile communication terminal calculated using a position of at least one base station under which the mobile communication terminal is placed;
second position acquiring means (13) for acquiring second position information of the mobile communication terminal, using the global positioning system;
position information using means (15) for displaying respectively the position-related information acquired based an the first position information and the second position information, wherein the position information using means (15) is adapted to display the position-related information acquired based on the first position information;
accuracy comparing means (14) for making a first comparison, between a horizontal error of the first position information indicated by error information contained in the first position information and a predetermined value, and
making a second comparison, between respective horizontal errors of the first position information and the second position information indicated by error information contained in the first position information and in the second position information;
when the horizontal error of the first position information is larger than the predetermined value,
the second position acquiring means (13) is adapted to acquire the second position information,
the accuracy comparing means (14) is adapted to compare between respective horizontal errors of the first position information and the second position information,
the position information using means (15) is adapted to display, after the display of the position-related information acquired based on the first position information, the position-related information acquired based on position information with higher accuracy out of the first position information and the second position information in accordance with the result of the comparison made by the accuracy comparing means (14),
when the horizontal error of the first position information is not over the predetermined value,
the second position acquiring means (13) is adapted to not acquire the second position information,
the position information using means (15) is adapted to display only the position related information acquired based on the first position information.

2. A position information using method comprising:
a step (S3) wherein first position acquiring means acquires first position information of a mobile communication terminal calculated using a position of at least one base station under which the mobile communication terminal is placed;
an acquisition step (S13) wherein a second position acquiring means acquires second position information of the mobile communication terminal, using the global positioning system;
a display step (S6) wherein a position information using means displays the position-related information acquired based on the first position information;
a first comparison step (S7) wherein an accuracy comparing means makes a comparison between a horizontal error of the first position information indicated by error information contained in the first position information and a predetermined value;
a second comparison step (S14) after the first comparison step wherein the accuracy comparing means makes a comparison between respective horizontal errors of the first position information and the second position information indicated by error information contained in the first position information and in the second position information;
wherein, when the horizontal error of the first position information is larger than the predetermined value in accordance with the result of the comparison in the first comparison step (S7), after the display of the position-related information acquired based on the first position information and after the acquiring of the second position information (S13), the second comparison step (S14) is carried out, and thereafter, the position information using means displays the position-related information acquired based on position information with higher accuracy out of the first position information and the second position information in accordance with the result of the comparison in the second comparison step (S 14);
when the horizontal error of the first position information is not over the predetermined value in accordance with the result of the comparison in the first comparison step (S7), doing the display step (S6) without doing the acquisition step (S13) and the second comparison step (S14).

## Patentansprüche

1. Mobil-Kommunikations-Endgerät (10) aufweisend:
ein erstes Positionsbeschaffungsmittel (12) zum Beschaffen einer ersten Positionsinformation des Mobil-Kommunikations-Endgeräts, die berechnet wird unter Verwendung einer Position mindestens einer Basisstation, unter der das Mobil-Kommunikations-Endgerät platziert ist;
ein zweites Positionsbeschaffungsmittel (13) zum Beschaffen einer zweiten Positionsinformation des Mobil-Kommunikations-Endgeräts unter Verwendung des globalen Positionsbestimmungssystems;
ein Positionsinformationsverwendungsmittel (15) zum Anzeigen der Positions-bezogenen Information, die basierend auf der ersten Positionsinformation bzw. der zweiten Positionsinformation beschafft wurde, wobei das Positionsinformationsverwendungsmittel (15) eingerichtet ist zum Anzeigen der Positions-bezogenen Information, die basierend auf der ersten Positionsinformation beschafft wurde;
ein Genauigkeitsvergleichsmittel (14) zum Durchführen eines ersten Vergleichs zwischen einem horizontalen Fehler der ersten Positionsinformation, der durch eine Fehlerinformation, die in der ersten Positionsinformation enthalten ist, angezeigt wird, und einem vorbestimmten Wert, und
Durchführen eines zweiten Vergleichs zwischen jeweiligen horizontalen Fehlern der ersten Positionsinformation und der zweiten Positionsinformation, die durch Fehlerinformation, die in der ersten Positionsinformation und in der zweiten Positionsinformation enthalten ist, angezeigt wird;
wenn der horizontale Fehler der ersten Positionsinformation größer ist als der vorbestimmte Wert,
ist das zweite Positionsbeschaffungsmittel (13) eingerichtet zum Beschaffen der zweiten Positionsinformation,
ist das Genauigkeitsvergleichsmittel (14) eingerichtet zum Vergleichen zwischen jeweiligen horizontalen Fehlern der ersten Positionsinformation und der zweiten Positionsinformation,
ist das Positionsinformationsverwendungsmittel (15) eingerichtet zum Anzeigen, nach dem Anzeigen der Positions-bezogenen Information, die basierend auf der ersten Positionsinformation beschafft wurde, der Positions-bezogenen Information, die basierend auf der Positionsinformation mit höherer Genauigkeit aus der ersten Positionsinformation und der zweiten Positionsinformation gemäß dem Ergebnis des Vergleichs, der von dem Genauigkeitsvergleichsmittel (14) durchgeführt wurde, beschafft wurde,
wenn der horizontale Fehler der ersten Positionsinformation nicht über dem vorbestimmten Wert ist,
ist das zweite Positionsbeschaffungsmittel (13) eingerichtet, die zweite Positionsinformation nicht zu beschaffen,
ist das Positionsinformationsverwendungsmittel (15) eingerichtet, nur die Positions-bezogene Information anzuzeigen, die basierend auf der ersten Positionsinformation beschafft worden ist.

2. Positionsinformationsverwendungsverfahren aufweisend:
einen Schritt (S3), in dem ein erstes Positionsbeschaffungsmittel eine erste Positionsinformation eines Mobil-Kommunikations-Endgeräts beschafft, die berechnet wird unter Verwendung einer Position mindestens einer Basisstation, unter der das Mobil-Kommunikations-Endgerät platziert ist;
einen Beschaffungsschritt (S13), in dem ein zweites Positionsbeschaffungsmittel eine zweite Positionsinformation des Mobil-Kommunikations-Endgeräts unter Verwendung des globalen Positionsbestimmungssystems beschafft;
einen Anzeigeschritt (S6), in dem ein Positionsinformationsverwendungsmittel die Positions-bezogene Information, die basierend auf der ersten Positionsinformation beschafft wurde, anzeigt;
einen ersten Vergleichsschritt (S7), in dem ein Genauigkeitsvergleichsmittel einen Vergleich zwischen einem horizontalen Fehler der ersten Positionsinformation, der durch eine Fehlerinformation, die in der ersten Positionsinformation enthalten ist, angezeigt wird, und einem vorbestimmten Wert durchführt;
einen zweiten Vergleichsschritt (S14) nach dem ersten Vergleichsschritt, in dem das Genauigkeitsvergleichsmittel einen Vergleich zwischen jeweiligen horizontalen Fehlern der ersten Positionsinformation und der zweiten Positionsinformation, die durch Fehlerinformation, die in der ersten Positionsinformation und in der zweiten Positionsinformation enthalten ist, angezeigt wird, durchführt;
wobei, wenn der horizontale Fehler der ersten Positionsinformation größer ist als der vorbestimmte Wert gemäß dem Ergebnis des Vergleichs in dem ersten Vergleichsschritt (S7), nach dem Anzeigen der Positions-bezogenen Information, die basierend auf der ersten Positionsinformation beschafft wurde und nach dem Beschaffen der zweiten Positionsinformation (S13) der zweite Vergleichsschritt (S14) durchgeführt wird und anschließend das Positionsinformationsverwendungsmittel die Positions-bezogene Information, die basierend auf der Positionsinformation mit höherer Genauigkeit aus der ersten Positionsinformation und der zweiten Positionsinformation gemäß dem Ergebnis des Vergleichs in dem zweiten Vergleichsschritt (S14) beschafft wurde, anzeigt;
wenn der horizontale Fehler der ersten Positionsinformation nicht über dem vorbestimmten Wert ist gemäß dem Ergebnis des Vergleichs in dem ersten Vergleichsschritt (S7),der Anzeigeschritt (S6) durchgeführt wird ohne Durchführen des Beschaffungsschritts (S13) und des zweiten Vergleichsschritts (S14).

## Revendications

1. Terminal de réseau mobile (10) comprenant :
des premiers moyens d'acquisition de position (12) pour l'acquisition de premières informations de position du terminal de réseau mobile calculées en utilisant une position d'au moins un poste de base sous lequel le terminal de réseau mobile est placé ;
des seconds moyens d'acquisition de position (13) pour l'acquisition de secondes informations de position du terminal de réseau mobile, en utilisant le système de positionnement global ;
des moyens d'utilisation d'informations de position (15) pour l'affichage, respectivement, des informations liées à la position acquises sur la base des premières informations de position et des secondes informations de position, dans laquelle les moyens d'utilisation d'informations de position (15) sont adaptés pour afficher les informations liées à la position acquises sur la base des premières informations de position ;
des moyens de comparaison de précision (14) pour effectuer une première comparaison entre une erreur horizontale des premières informations de position indiquée par des informations d'erreur contenues dans les premières informations de position et une valeur prédéterminée et
effectuer une seconde comparaison entre des erreurs horizontales respectives des premières informations de position et des secondes informations de position indiquées par des informations d'erreur contenues dans les premières informations de position et dans les secondes informations de position ;
dans laquelle :
lorsque l'erreur horizontale des premières informations de position est plus grande que la valeur prédéterminée,
les seconds moyens d'acquisition de position (13) sont adaptés pour acquérir les secondes informations de position,
les moyens de comparaison de précision (14) sont adaptés pour effectuer une comparaison entre des erreurs horizontales respectives des premières informations de position et des secondes informations de position,
les moyens d'utilisation d'informations de position (15) sont adaptés pour afficher, après affichage des informations liées à la position acquises sur la base des première informations de position, les informations liées à la position acquises sur la base d'informations de position d'une précision supérieure tirées des premières informations de position et des secondes informations de position selon le résultat de la comparaison effectuée par les moyens de comparaison de précision (14),
lorsque l'erreur horizontale des premières informations de position ne dépasse pas la valeur prédéterminée,
les seconds moyen d'acquisition de position (13) sont adaptés pour ne pas acquérir les secondes informations de position,
les moyens d'utilisation d'informations de position (15) sont adaptés pour n'afficher que les informations liées à la position acquises sur la base des premières informations de position.

2. Procédé d'utilisation d'informations de position comprenant :
une étape (S3), dans laquelle des premiers moyens d'acquisition de position acquièrent des premières informations de position d'un terminal de réseau mobile calculées en utilisant une position d'au moins un poste de base sous lequel le terminal de réseau mobile est placé ;
une étape d'acquisition (S13), dans laquelle des seconds moyens d'acquisition de position acquièrent des secondes informations de position du terminal de réseau mobile, en utilisant le système de positionnement global ;
une étape d'affichage (S6), dans laquelle des moyens d'utilisation d'informations de position affichent les informations liées à la position acquises sur la base des première informations de position ;
une première étape de comparaison (S7), dans laquelle des moyens de comparaison de précision effectuent une comparaison entre une erreur horizontale des premières informations de position indiquées par des informations d'erreur contenues dans les premières informations de position et une valeur prédéterminée ;
une seconde étape de comparaison (S14) après la première étape de comparaison, dans laquelle les moyens de comparaison de précision effectuent une comparaison entre des erreurs horizontales respectives des premières informations de position et des secondes informations de position indiquées par des informations d'erreur contenues dans les premières informations de position et dans les secondes informations de position, dans laquelle, lorsque l'erreur horizontale des premières informations de position est plus grande que la valeur prédéterminée selon le résultat de la comparaison dans la première étape de comparaison (S7), après l'affichage des informations liées à la position acquises sur la base des premières informations de position et après l'acquisition des secondes informations de position (S 13), la seconde étape de comparaison (S14) est effectuée et, ensuite, les moyens d'utilisation d'informations de position affichent les informations liées à la position acquises sur la base d'informations de position d'une précision supérieure tirées des premières informations de position et des secondes informations de position selon le résultat de la comparaison dans la seconde étape de comparaison (S 14) ;
lorsque l'erreur horizontale des première informations de position ne dépasse pas la valeur prédéterminée selon le résultat de la comparaison dans la première étape de comparaison (S7), l'étape d'affichage (S6) est effectuée sans effectuer l'étape d'acquisition (S13) et la seconde étape de comparaison (S14).
